# EUROPEAN PATENT APPLICATION

(11) **EP 4 438 554 A1**
(43) Date of publication of application: **02.10.2024**
(21) Application number: 22895564.7
(22) Date of filing: 14.11.2022
(51) Int. Cl.: C01B 17/28, H01B 1/06, H01M 10/0562

(54) **LITHIUM SULFIDE AND METHOD FOR PRODUCING SAME, AND METHOD FOR PRODUCING SULFIDE SOLID ELECTROLYTE**

(30) Priority: 22.11.2021 JP 2021189602
(71) Applicant: Mitsui Mining & Smelting Co., Ltd., Shinagawa-ku Tokyo 141-8584 (JP)
(72) Inventor: KAWAMURA, Takeru, Ageo-shi, Saitama 362-0021 (JP)
(74) Representative: Novagraaf Technologies
(86) International application number: PCT/JP2022/042188
(87) International publication number: WO 2023/090282

(57) **Abstract**

The present invention provides lithium sulfide having, in an X-ray diffraction pattern as measured using an X-ray diffraction apparatus using CuKα1 rays, a diffraction peak A at the position of 2θ = 31.2°±1.0° and a diffraction peak B at the position of 2θ = 23.0°±1.0°, and a value of I_{b} to Iₐ of from 0.012 to 0.045, where the Iₐ is an intensity of the diffraction peak A and the I_{b} is an intensity of the diffraction peak B. Furthermore, a value of I_{c} to the Iₐ is preferably 0.024 or less, where the I_{c} is an intensity of a diffraction peak C that is at the position of 2θ = 21.3°±1.2°.

## Description

### Technical Field

The present invention relates to lithium sulfide and a method for producing the same. The present invention further relates to a method for producing a sulfide solid electrolyte using the lithium sulfide.

### Background Art

Solid-state lithium secondary batteries using a sulfide solid electrolyte synthesized using lithium sulfide or the like as a starting material have the advantage of simplified safety devices and superior manufacturing cost and productivity because they do not use flammable organic solvents. This type of solid electrolyte is also advantageous in terms of improvement in safety and durability, as ionic species other than lithium ions do not migrate through the electrolyte, so side reactions caused by anion migration do not occur.

As a sulfide solid electrolyte, the applicant previously proposed a crystalline solid electrolyte containing a lithium element, a sulfur element, a phosphorus element, and a halogen element such as chlorine and bromine (see Patent Literature 1). According to this literature, this sulfide solid electrolyte is produced by mixing lithium sulfide (Li₂S), phosphorus pentasulfide (P₂S₅), and lithium halide such as lithium chloride (LiCl) or lithium bromide (LiBr) and further adding elemental sulfur thereto, and heating the thus obtained mixture in an atmosphere containing an argon gas. This method has the advantage of effectively preventing the occurrence of sulfur defects in the solid electrolyte, by adding elemental sulfur.

### Citation List

### Patent Literature

Patent Literature 1: US 2021/020984A1

### Summary of Invention

In the method for producing a sulfide solid electrolyte described in Patent Literature 1, a step of adding elemental sulfur in addition to the raw materials essential for producing a sulfide solid electrolyte is required to prevent the occurrence of sulfur defects, which makes the production process more complicated. In addition, since sulfide solid electrolytes are averse to moisture, it is necessary to remove moisture from the raw materials during the production, and the moisture has to be removed from elemental sulfur as well. This is another factor that complicates the production process. Thus, there is demand for a new raw material from which a sulfide solid electrolyte can be produced without using elemental sulfur.

Therefore, it is an object of the present invention to provide a raw material that can eliminate the use of elemental sulfur in the method for producing a sulfide solid electrolyte.

The present invention provides lithium sulfide having, in an X-ray diffraction pattern as measured using an X-ray diffraction apparatus using CuKα1 rays,
a diffraction peak A at the position of 2θ = 31.2°±1.0° and a diffraction peak
B at the position of 2θ = 23.0°±1.0°, and
a value of I_{b} to Iₐ of from 0.012 to 0.045,
wherein the Iₐ is an intensity of the diffraction peak A, and the I_{b} is an intensity of the diffraction peak B.

Furthermore, the present invention provides a method for producing the above-described lithium sulfide, including:
a step of firing lithium carbonate in an atmosphere containing sulfur gas and hydrogen gas,
wherein the sulfur gas is contained in such a manner that a value of the number of moles of sulfur element with respect to the number of moles of lithium carbonate is from 8.0 to 24.0.

Furthermore, the present invention provides a method for producing a sulfide solid electrolyte, including:
a step of mixing the lithium sulfide according to claim 1 or 2 with phosphorus pentasulfide and lithium halide to obtain a raw material composition; and
a step of firing the raw material composition in an atmosphere comprising an inert gas or an atmosphere comprising hydrogen sulfide gas.

### Description of Embodiment

The present invention will be described below based on its preferred embodiment. Lithium sulfide of the present invention contains elemental sulfur (S) in addition to lithium sulfide (Li₂S). There are various allotropes of elemental sulfur, but the lithium sulfide of the present invention need only contain at least one type of elemental sulfur, and may contain two or more different types of elemental sulfur. Examples of the elemental sulfur include α-sulfur Ss, which is orthorhombic.

Elemental sulfur is contained in a predetermined amount in the lithium sulfide of the present invention. The amount of elemental sulfur contained in the lithium sulfide can be obtained based on the intensities of diffraction peaks in X-ray diffraction (hereinafter alternatively referred to as "XRD") measurements in the present invention. Specifically, an XRD pattern obtained by measuring the lithium sulfide of the present invention using an XRD apparatus using CuKα1 rays has a diffraction peak A at the position of 2θ = 31.2°±1.0° and a diffraction peak B at the position of 2θ = 23.0°±1.0°. The diffraction peak A is a diffraction peak derived from the (200) plane of lithium sulfide. The diffraction peak B is a diffraction peak derived from the (222) plane of elemental sulfur. The positions of the peaks A and B may be, for example, ±0.7°, ±0.5°, or ±0.3°, with respect to the above-mentioned center values. When the intensity of the diffraction peak A is taken as Iₐ and the intensity of the diffraction peak B is taken as I_{b}, a value of I_{b} to Iₐ, that is, a value of I_{b}/Iₐ is, for example, preferably 0.012 or more, more preferably 0.013 or more, even more preferably 0.015 or more, and even more preferable 0.017 or more. If the value of I_{b}/Iₐ is within the above-mentioned range, lithium sulfide containing a sufficient amount of elemental sulfur can be obtained. Therefore, in the case of producing a sulfide solid electrolyte using the lithium sulfide of the present invention as a raw material, the same effect as when using elemental sulfur as a starting material can be obtained without separately setting up a step of adding elemental sulfur. The value of I_{b}/Iₐ may be, for example, 0.045 or less.

The lithium sulfide of the present invention preferably contains lithium sulfide and elemental sulfur and does not contain any other substances, from the viewpoint of improving the performance, for example, the lithium ion conductivity of a sulfide solid electrolyte produced using the lithium sulfide of the present invention as a raw material. In the production of lithium sulfide, typically, lithium sulfate, lithium thiosulfate, and lithium oxide may be formed as byproducts, or lithium carbonate serving as a starting material may remain. In the present invention, it is desirable to minimize the presence of these compounds in the lithium sulfide to the extent possible. These compounds are allowed to be present as impurities in the lithium sulfide of the present invention within an amount that they do not adversely affect the performance of the sulfide solid electrolyte produced using the lithium sulfide of the present invention. Specifically, an XRD pattern obtained through XRD measurements of the lithium sulfide of the present invention has a value of I_{c} to Iₐ, that is, a value of I_{c}/Iₐ of, for example, preferably 0.024 or less, more preferably 0.011 or less, and even more preferably 0.009 or less, where the I_{c} is an intensity of a diffraction peak C that is at the position of 2θ = 21.3°±1.2°. The value of I_{c}/Iₐ is usually greater than 0. If the value of I_{c}/Iₐ is within the above-mentioned range, a sulfide solid electrolyte with good lithium ion conductivity can be obtained when using the lithium sulfide of the present invention as a starting material. The peak C is a diffraction peak derived from the (110) plane of lithium carbonate. The position of the peak C may be, for example, ±0.7°, ±0.5°, or ±0.3°, with respect to the above-mentioned center value.

From the viewpoint of purity of lithium sulfide described above, an XRD pattern obtained through XRD measurements of the lithium sulfide of the present invention has a value of I_{d} to Iₐ, that is, a value of I_{d}/Iₐ of, for example, preferably 0.16 or less, more preferably 0.12 or less, and even more preferably 0.07 or less, where the I_{d} is an intensity of a diffraction peak D that is at the position of 2θ = 22.2°±1.0°. The value of I_{d}/Iₐ is usually greater than 0. If the value of I_{d}/Iₐ is within the above-mentioned range, a sulfide solid electrolyte with good lithium ion conductivity can be obtained when using the lithium sulfide of the present invention as a starting material. The peak D is a diffraction peak derived from the (11-1) plane of lithium sulfate. The position of the peak D may be, for example, ±0.7°, ±0.5°, or ±0.3°.

Next, a preferred method for producing the lithium sulfide of the present invention will be described. In the method for producing lithium sulfide of the present invention, lithium carbonate (Li₂CO₃) is used as one of the raw materials of lithium sulfide. Unlike other lithium source compounds such as lithium hydroxide, lithium carbonate has extremely low hygroscopicity and is thus advantageous compared with other lithium source compounds such as being easy to adjust the particle size, especially easy to reduce the particle size.

In the present invention, powdered lithium carbonate can be used to produce a powder of the desired lithium sulfide by reacting sulfur (S) vapor and hydrogen gas (H₂) with lithium carbonate in a solid phase. That is to say, the method for producing lithium sulfide of the present invention can use a gas-solid reaction (in other words, a dry reaction) in which any solvent such as water is not used for the reaction. Although hydrogen sulfide has been used as the sulfur source compound in conventionally known methods for producing lithium sulfide, in the present invention, elemental sulfur, which is less expensive than hydrogen sulfide, can be used as the sulfur source compound. Therefore, this production method can produce lithium sulfide at a lower cost than the conventionally known methods.

In the production of lithium sulfide through a gas-solid reaction, for example, a continuous apparatus or a batch apparatus is used as the reaction apparatus.

The powder of the lithium carbonate has an average particle size of, for example, preferably 1 µm or more, more preferably 3 µm or more, and even more preferably 6 µm or more. Meanwhile, the average particle size is, for example, preferably 100 µm or less, more preferably 80 µm or less, and even more preferably 55 µm or less. If the powder of the lithium carbonate has an average particle size that is within the above-mentioned range, the gas-solid reaction can proceed more efficiently. The "average particle size of lithium carbonate" as used herein refers to the volume-based cumulative particle size D₅₀ at a cumulative volume of 50 vol% based on a laser diffraction scattering particle size measurement method.

In this production method, the lithium carbonate can be subjected to a firing step in a state in which a powder of the lithium carbonate is allowed to stand or caused to flow in an atmosphere containing sulfur gas and hydrogen gas. The firing step can be performed in an open system. The state in which the firing step is performed in an open system means that the reaction system in which the firing step is performed is not located in an enclosed space. The firing step of lithium carbonate in this production method can be performed on a powder of the lithium carbonate while circulating an atmosphere containing sulfur gas and hydrogen gas. Specifically, the lithium carbonate can be fired while circulating a mixed gas containing sulfur gas and hydrogen gas inside a heating furnace in which a powder of the lithium carbonate is placed. Using such a firing method makes it possible to produce lithium carbonate efficiently on an industrial scale.

The mixed gas for use in the firing contains sulfur gas and hydrogen gas. The mixed gas may contain only sulfur gas and hydrogen gas, or other gases in addition to sulfur gas and hydrogen gas. The other gases may be various inert gases, for example, nitrogen gas, rare gases such as argon, or the like. It is preferable, however, that the mixed gas does not contain gases other than sulfur gas and hydrogen gas, and inert gases used as necessary, from the viewpoint of successfully producing the desired lithium sulfide.

The mixed gas that is used to produce lithium sulfide from lithium carbonate in the production method of the present invention preferably contains only sulfur gas and hydrogen gas. On the other hand, from the viewpoint of safely and efficiently causing the reaction to occur, it is preferable to use hydrogen gas in a state of being diluted with an inert gas. Specifically, it is preferable that an inert gas such as nitrogen gas is used as a dilution gas, and the dilution gas is mixed with hydrogen gas, which is then mixed with sulfur gas to prepare a mixed gas that is to be supplied to lithium carbonate. The mixing proportion of the dilution gas and the hydrogen gas is in such a manner that the proportion of the hydrogen gas is, for example, preferably 1.0 vol% or more, more preferably 1.5 vol% or more, and even more preferably 2.0 vol% or more, with respect to the total amount of the gases. Meanwhile, the proportion is, for example, preferably 4.0 vol% or less, more preferably 3.5 vol% or less, and even more preferably 3.0 vol% or less. This is because excellent safety and excellent reaction efficiency can be obtained.

It is advantageous that the sulfur gas that is to be mixed with hydrogen gas is obtained by liquefying solid sulfur through heating and then vaporizing the resultant, from the viewpoint of industrial simplicity and safety. In the case of obtaining sulfur gas using this method, solid sulfur is preferably heated, for example, to 200 to 300°C under atmospheric pressure.

The amount of mixed gas that contains hydrogen gas and sulfur gas and is to be supplied to lithium carbonate is determined as appropriate in relation to the amount of the lithium carbonate. Specifically, the amount is determined as follows.

The amount of sulfur gas that is to be supplied is preferably determined in relation to the number of moles of lithium carbonate that is to be fired. That is to say, the sulfur gas is preferably contained in the firing atmosphere in such a manner that the value of the number of moles of sulfur element with respect to the number of moles of lithium carbonate is from 8.0 to 24.0. That is to say, the amount of sulfur element that is to be supplied for use in the firing of lithium carbonate is, for example, preferably 8.0 moles or more, more preferably 10.0 moles or more, and even more preferably 11.0 moles or more, with respect to one mole of lithium carbonate. Meanwhile, the amount of sulfur element that is to be supplied is, for example, preferably 24.0 moles or less, more preferably 20.0 moles or less, and even more preferably 18.0 moles or less, with respect to one mole of lithium carbonate. Using the sulfur gas in such a proportion makes it possible to have sufficient coexistence of elemental sulfur in the produced lithium sulfide.

The amount of sulfur element supplied to lithium carbonate can be calculated from the amount of decrease in solid sulfur, for example, in the case in which sulfur gas is generated by heating solid sulfur.

The amount of hydrogen gas that is to be supplied is also preferably determined in relation to the number of moles of lithium carbonate that is to be fired. That is to say, the hydrogen gas is preferably contained in such a manner that the value of the number of moles of hydrogen gas with respect to the number of moles of lithium carbonate is, for example, from 8.5 to 12.0. That is to say, the amount of hydrogen gas that is to be supplied for use in the firing of lithium carbonate is, for example, preferably 8.5 moles or more, more preferably 9.0 moles or more, and even more preferably 9.5 moles or more, with respect to one mole of lithium carbonate. Meanwhile, the amount of hydrogen gas that is to be supplied is, for example, preferably 12.0 moles or less, more preferably 11.0 moles or less, and even more preferably 10.0 moles or less, with respect to one mole of lithium carbonate. Using the hydrogen gas in such a proportion makes it possible to have sufficient coexistence of elemental sulfur in the produced lithium sulfide.

The amount of hydrogen gas supplied to lithium carbonate can be measured, for example, using a flow meter installed between the hydrogen gas source (e.g., a hydrogen gas cylinder) and the reaction system (e.g., a heating furnace).

The temperature at which lithium carbonate is fired in the present invention is not particularly limited as long as it is a temperature at which lithium sulfide can be produced, but the temperature is, for example, preferably 650°C or higher, more preferably 700°C or higher, and even more preferably 723°C (which is the melting point of lithium carbonate) or higher. Meanwhile, the firing temperature is, for example, preferably 1310°C or lower, more preferably 1000°C or lower, and even more preferably 800°C or lower. This can increase the reaction efficiency of lithium carbonate and preferably prevent lithium carbonate from decomposing.

In the case of supplying the mixed gas containing sulfur gas and hydrogen gas to lithium carbonate and firing the lithium carbonate, it is preferable to supply the mixed gas to lithium carbonate after the temperature of the reaction system reaches 650°C or higher, from the viewpoint of reliably producing lithium sulfide. For example, in the case of firing lithium carbonate that is placed in a heating furnace, it is preferable to circulate the mixed gas inside the heating furnace after the temperature in the heating furnace reaches 650°C or higher.

Meanwhile, it is preferable to supply only the inert gas into the reaction system without supplying the mixed gas into the reaction system, until the temperature of the reaction system reaches 650°C, from the viewpoint of suppressing the formation of impurities such as lithium compounds containing lithium sulfate. For example, in the case of firing lithium carbonate that is placed in a heating furnace, it is preferable to circulate only an inert gas such as nitrogen gas inside the heating furnace without circulating the mixed gas, until the temperature in the heating furnace reaches 650°C.

The firing time is set as appropriate in such a manner that lithium sulfide is reliably produced, assuming that the amounts of sulfur element and hydrogen gas that are to be supplied are set to the values mentioned above.

In this production method, part of the mixed gas supplied for the firing of lithium carbonate may be discharged from the reaction system in an unreacted state or byproducts of the reaction may be discharged from the reaction system. For example, sulfur gas may be discharged from the reaction system in an unreacted state. In that case, the sulfur gas can be solidified and removed by cooling the discharged gas. Also, hydrogen sulfide gas may be discharged from the reaction system as a byproduct of the reaction. In that case, the hydrogen sulfide can be oxidized and removed by bubbling the discharged gas in an aqueous solution of hypochlorous acid or a salt thereof.

After the supply of a predetermined amount of sulfur gas and hydrogen gas to lithium carbonate is completed, the reaction is stopped by stopping the circulation of the mixed gas and stopping the heating of the reaction system. In this manner, lithium sulfide containing a predetermined amount of elemental sulfur can be easily obtained.

The lithium sulfide obtained using this production method, that is, the lithium sulfide containing a predetermined amount of elemental sulfur is useful, for example, as a raw material for sulfide-based solid electrolytes in lithium ion batteries. For example, a raw material composition obtained by mixing lithium sulfide, phosphorus pentasulfide, and lithium halide such as lithium chloride (LiCl) and/or lithium bromide (LiBr) can be fired in an atmosphere containing an inert gas or an atmosphere containing hydrogen sulfide atmosphere to synthesize a crystalline solid electrolyte such as a solid electrolyte having a crystal phase with an argyrodite-type crystal structure. In the case of producing this solid electrolyte, lithium sulfide contains elemental sulfur, and thus it is not necessary to deliberately add elemental sulfur to the raw material composition. That is to say, the raw material composition does not have to contain elemental sulfur. Therefore, using the lithium sulfide of the present invention has the advantage that the production of the sulfide solid electrolyte is not complicated. The state in which the raw material composition does not contain elemental sulfur means that elemental sulfur exists in the raw material composition independently of the components constituting the raw material composition.

### Examples

Hereinafter, the present invention will be described in more detail by way of the following examples. However, the scope of the invention is not limited to such examples.

### Example 1

### (1) Preparation of mixed gas

Hydrogen gas (with a concentration of 3.5 vol%) diluted with nitrogen gas was prepared. Solid sulfur was prepared separately and placed in a flask, after which the flask was heated to 200 to 380°C with a mantle heater to vaporize the solid sulfur and generate sulfur gas. The sulfur gas was then mixed with the hydrogen gas diluted with nitrogen gas to obtain a mixed gas. The ratio of sulfur gas and hydrogen gas in this mixed gas was set to a predetermined ratio by adjusting the heating temperature of the solid sulfur, the flow rate of the hydrogen gas diluted with nitrogen gas, and the like.

### (2) Preparation of powder of lithium carbonate

A powder of lithium carbonate with D₅₀ of 5.9 µm was prepared. A predetermined amount of powder of the lithium carbonate was allowed to stand in a tube furnace.

### (3) Heating of tube furnace

The tube furnace was heated by applying electricity to an electric heater installed in the tube furnace. At this time, nitrogen gas was circulated inside the tube furnace.

### (4) Firing of lithium carbonate

After the temperature in the tube furnace reached 750°C, this temperature was maintained, the mixed gas prepared in (1) was circulated inside the tube furnace, and the lithium carbonate was fired to produce a powder of lithium sulfide. The firing time was as shown in Table 1 below. The number of moles of sulfur element and hydrogen gas supplied to the lithium carbonate during this time was as expressed in per mole of lithium carbonate in the table. After the firing was completed for the time shown in the same table, the reaction was terminated by stopping the supply of the mixed gas and stopping the heating of the tube furnace.

### Examples 2 to 6 and Comparative Examples 1 and 2

The firing time was set to the values shown in Table 1. The number of moles of sulfur element and hydrogen gas supplied to the lithium carbonate was as expressed in per mole of lithium carbonate in the table. Lithium sulfide was produced in the same way as that of Example 1, except for these aspects.

### Evaluation

XRD measurements were performed on the lithium sulfide obtained in the examples and the comparative examples. The intensities Iₐ, I_{b}, I_{c}, and I_{d} of the peaks A, B, C, and D described above were determined, and I_{b}/Iₐ, I_{c}/Iₐ, and Iₐ/Iₐ were calculated. Furthermore, the composition (mass%) of each substance contained in the product was calculated from the intensity of the corresponding peak. Table 1 below shows the results. Note that "-" in the composition results in Table 1 refers to a value of 0.01 or less, and "-" in the peak intensity ratio refers to a value of 0.001 or less.

The XRD measurement conditions were as follows.
- Apparatus name: Fully automatic multi-purpose X-ray diffractometer SmartLab SE (manufactured by Rigaku Corporation)
- Radiation source: CuKα1
- Tube voltage: 40 kV
- Tube current: 50 mA
- Measuring method: Concentration method (reflection method)
- Optical system: Multilayer mirror divergent beam method (CBO-α)
- Detector: One-dimensional semiconductor detector
- Incident solar slit: Solar slit 2.5°
- Length limiting slit: 10 mm
- Receiving solar slit: 2.5°
- Incident slit: 1/6°
- Receiving slit: 2 mm (open)
- Measurement range: 2θ = 10 to 120°
- Step width: 0.02°
- Scanning speed: 1.0°/min

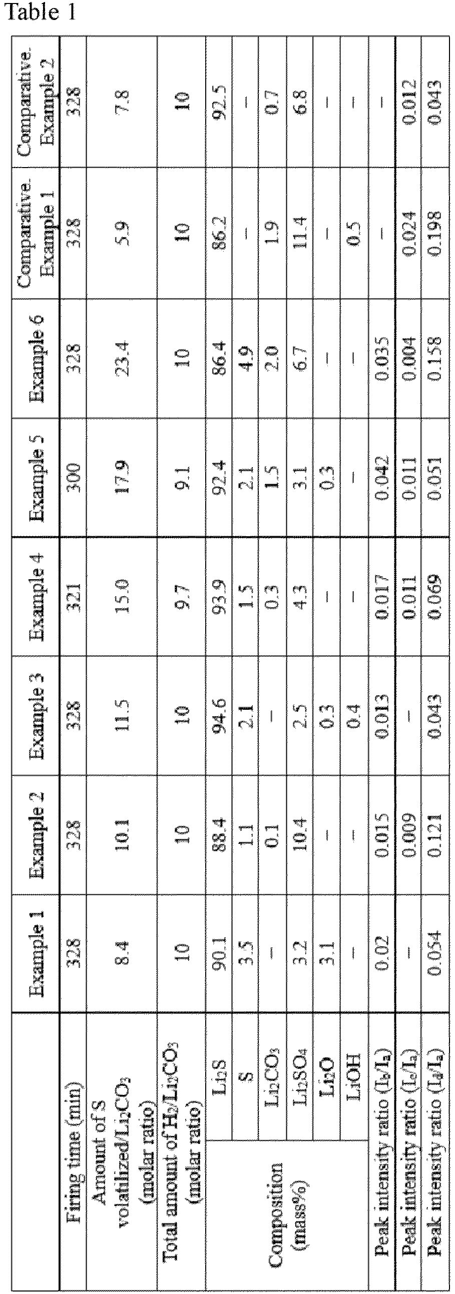

As is clear from the results shown in Table 1, it was found that lithium sulfide obtained in the examples contains a predetermined amount of elemental sulfur.

### Industrial Applicability

The present invention provides lithium sulfide suitably used as a raw material for the production of a sulfide solid electrolyte. If this lithium sulfide is used, a sulfide solid electrolyte can be successfully produced without using elemental sulfur.

## Claims

1. Lithium sulfide having, in an X-ray diffraction pattern as measured using an X-ray diffraction apparatus using CuKα1 rays,
a diffraction peak A at the position of 2θ = 31.2°±1.0° and a diffraction peak
B at the position of 2θ = 23.0°±1.0°, and
a value of I_{b} to Iₐ of from 0.012 to 0.045,
wherein the Iₐ is an intensity of the diffraction peak A, and the I_{b} is an intensity of the diffraction peak B.

2. The lithium sulfide according to claim 1,
wherein, in an X-ray diffraction pattern as measured using an X-ray diffraction apparatus using CuKα1 rays, a value of I_{c} to the Iₐ is 0.024 or less,
wherein the I_{c} is an intensity of a diffraction peak C at the position of 2θ = 21.3°±1.2°.

3. A method for producing the lithium sulfide according to claim 1, comprising:
a step of firing lithium carbonate in an atmosphere containing sulfur gas and hydrogen gas,
wherein the sulfur gas is contained in the atmosphere in such a manner that a value of the number of moles of sulfur element with respect to the number of moles of lithium carbonate is from 8.0 to 24.0.

4. A method for producing a sulfide solid electrolyte, comprising:
a step of mixing the lithium sulfide according to claim 1 or 2 with phosphorus pentasulfide and lithium halide to obtain a raw material composition; and
a step of firing the raw material composition in an atmosphere comprising an inert gas or an atmosphere comprising hydrogen sulfide gas.

5. The production method according to claim 4, wherein the raw material composition contains no elemental sulfur.
